# EUROPÄISCHE PATENTSCHRIFT

(11) **EP 1 117 948 B1**
(45) Veröffentlichungstag und Bekanntmachung des Hinweises auf die Patenterteilung: **28.08.2002**
(21) Anmeldenummer: 99950559.7
(22) Anmeldetag: 28.09.1999
(51) Int. Cl.: F16H 55/08

(54) **ZAHNRADPAARUNGEN BESTEHEND AUS ZWEI STIRNZAHNRÄDERN FÜR GERAD- ODER SCHRÄGVERZAHNTE LAUFVERZAHNUNGEN**
GEAR PAIRS COMPRISED OF TWO SPUR GEARS FOR STRAIGHT-CUT OR HELICAL-CUT RUNNING GEARS
ENGRENAGES COMPRENANT DEUX ROUES DENTEES FRONTALES POUR DENTURES D'ENGRENEMENT DROITES OU HELICOIDALES

(30) Priorität: 28.09.1998 DE 19844388
(43) Veröffentlichungstag der Anmeldung: 25.07.2001
(73) Patentinhaber: BLW PRÄZISIONSSCHMIEDE GmbH, 80807 München (DE)
(72) Erfinder: WESTERKAMP, Christoph, D-42929 Wermelskirchen (DE); GUTMANN, Peter, D-81927 München (DE)
(74) Vertreter: Grättinger & Partner (GbR)
(86) Internationale Anmeldenummer: EP9907175
(87) Internationale Veröffentlichungsnummer: WO00019128

(56) Entgegenhaltungen:
- US-A- 1 959 910
- US-A- 3 327 548
- US-A- 3 982 444
- US-A- 4 111 031

## Beschreibung

Die Erfindung betrifft eine Zahnradpaarung bestehend aus zwei Stirnzahnrädern für gerad- oder schrägverzahnte Laufverzahnungen, welche jeweils nur zu einer Zahnradstirnseite hin unter Ausbildung einer Endrücknahme oder einer Balligkeit korrigiert und mit ihrer Korrektur auf gegenüberliegenden Zahnradstirnseiten einander zugeordnet sind.

Bei bekannten Laufverzahnungen dieser Art dient die Endrücknahme bzw. Balligkeit der Vermeidung sog.

"Kantenträger".

Eine derartige Flankenlinienkorrektur ist in der gattungsbildenden japanischen Offenlegungsschrift 3-69844 beschrieben. Man erreicht dabei, daß die Zahnenden im Bereich der gegenüberliegenden Zahnradstirnseiten nicht überlastet werden als Folge gelegentlich auftretender Flankenlinienabweichungen.

Bei einer Zahnradpaarung mit Flankenlinienkorrektur hängt der erreichte Entlastungseffekt davon ab, wie sich die verbleibenden Flankenlinienabweichungen der einzelnen Stirnzahnräder sowie deren Lagerabweichungen in der Eingriffsebene auswirken, in wie weit sich die Flankenlinienabweichungen der Verzahnungen und die Achsabweichungen der Wellen ausgleichen bzw. ob sie, z.B. durch einstellbare Lager, aufeinander abgestimmt werden können.

In der Praxis werden Laufverzahnungen der genannten Art üblicherweise spanend hergestellt, wobei die Herstellungskosten höher sind, verglichen mit umformtechnisch oder durch Pulverpressen hergestellten Zahnrädern.

Demgegenüber ergeben sich zugunsten einer umformtechnischen Herstellung Vorteile hinsichtlich eines geringeren Materialeinsatzes, einer kürzeren Fertigungstaktzeit sowie des Wegfalls der Weichbearbeitung.

Dementsprechend liegt der vorliegenden Erfindung die Aufgabe zugrunde, eine Zahnradpaarung der eingangs genannten Art aus umformtechnisch oder durch Pulverpressen herstellbaren Stirnzahnrädern zu schaffen, die sich billig herstellen lassen, ohne daß dabei die Verzahnungsqualität leidet; außerdem soll die Wirkung der Endrücknahmen bzw. Flankenballigkeit dieser Zahnräder noch gesteigert werden durch eine besondere Leichtgängigkeit des Zahneingriffs beim Schaltvorgang.

Diese Aufgabe wird erfindungsgemäß dadurch gelöst, daß die Zähne außerhalb der Korrektur von der korrigierten Zahnradstirnseite weg einen konischen, zur angrenzenden Zahnflanke hin zunehmenden Flankenverlauf aufweisen. Gemäß einer besonders einfachen Ausführungsform ist vorgesehen, daß beide Zahnräder identisch sind.

Stirnzahnräder für eine derartige Laufradpaarung können umformtechnisch problemlos mit ausreichender Verzahnungsqualität hergestellt werden, da sie aus einer einteiligen Form in einer Richtung entformbar sind.

Abweichend von der generellen Ausbildung derartiger Laufverzahnungen sind Balligkeit bzw. Endrücknahme jeweils nur am Zahnende einer der beiden Stirnseiten ausgebildet. Der Betrag der Balligkeit bzw. Endrücknahme je Zahnflanke ist grundsätzlich beliebig wählbar; er liegt üblicherweise zwischen 0,005 und 0,025 mm pro Zahnflanke; seine Größe ist zweckmäßig so zu wählen, daß bei Eingriff des Zahnrads in ein Gegenzahnrad einseitige Flankenbelastungen, sog. "Kantenträger", vermieden werden.

Dabei erhält man bei der Paarung zweier Zahnräder mit jeweils einseitiger Zahnkorrektur, so daß sich deren korrigierte Zahnradstirnseiten einander gegenüberliegen, den gleichen Effekt wie bei Laufverzahnungen mit Zahnrädern, welche beidseitig Breitenballigkeiten bzw.

Endrücknahmen aufweisen.

Durch die erfindungsgemäße Konizität des Zahnflankenverlaufs ergibt sich ein besonders weiches Ineinandergreifen der Stirnzahnräder beim Schaltvorgang. Dabei können der Konuswinkel und die Breitenballigkeit derart aufeinander abgestimmt werden, daß ein Optimum an Leichtgängigkeit des Schaltvorgangs und Genauigkeit des Zahnradeingriffs gegeben ist.

Im folgenden wird ein Ausführungsbeispiel der Erfindung anhand der Zeichnung erläutert. Es zeigt
- Fig. 1: die schematische Ansicht der Verzahnung eines bekannten Zahnrads mit Breitenballigkeit;
- Fig. 2 u. 3: je eine schematische Ansicht eines Zahnrads mit einseitiger Flankenkorrektur, aber auf gegenüberliegenden Zahnradstirnseiten;
- Fig. 4: die schematische Darstellung eines Zahneingriffs mit Flankenlinienverlauf und
- Fig. 5: den graphischen Verlauf zweier Zahnlängsschnitte einer Zahnradpaarung, jeweils zwischen zwei Grenzlinien.

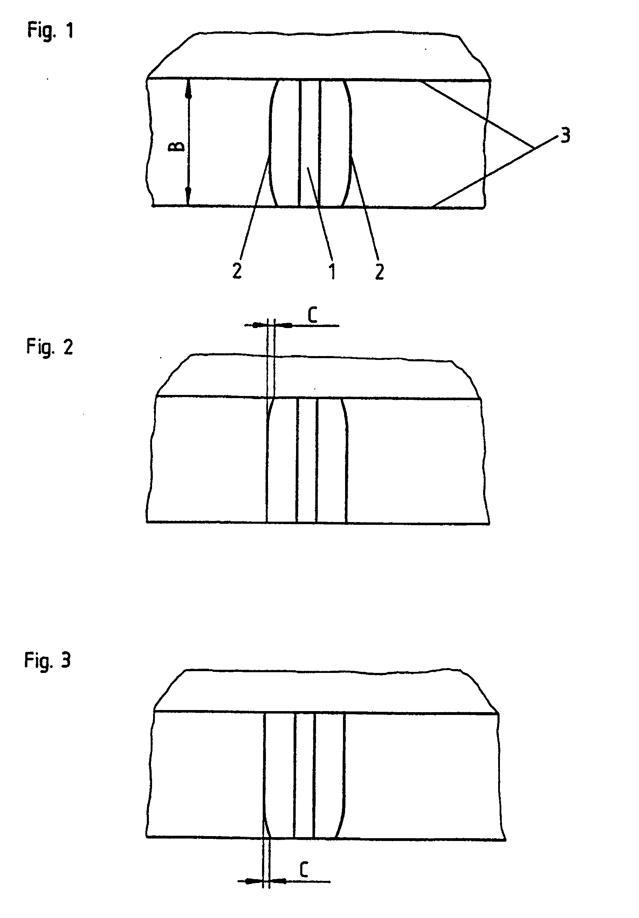

Fig. 1 zeigt die schematische Ansicht eines Zahns mit Zahnrücken 1 und balligen Zahnflanken 2. Der Zahn ist symmetrisch ausgebildet, in der Weise, daß die Zahnflanken an beiden Zahnenden, welche durch die gegenüberliegenden Zahnradstirnseiten 3 begrenzt sind, ballig zurückgenommen sind. Insoweit ist der Zahn und damit alle anderen nicht dargestellten Zähne bezüglich der Mittelebene des Zahnrads zwischen seinen beiden Zahnradstirnseiten symmetrisch ausgebildet. Die beiden Zahnradstirnseiten sind voneinander durch die Breite B des Zahnrads entfernt.

Die Stirnzahnräder gemäß den Abbildungen 2 und 3 besitzen jeweils einseitig ballig ausgebildete Zähne, wobei das Maß der Balligkeit mit C angegeben ist. Beide Stirnzahnräder werden derart miteinander gepaart, daß jeweils ein unkorrigiertes Zahnende des einen Rads mit einem korrigierten Zahnende des anderen Rads in Eingriff steht.

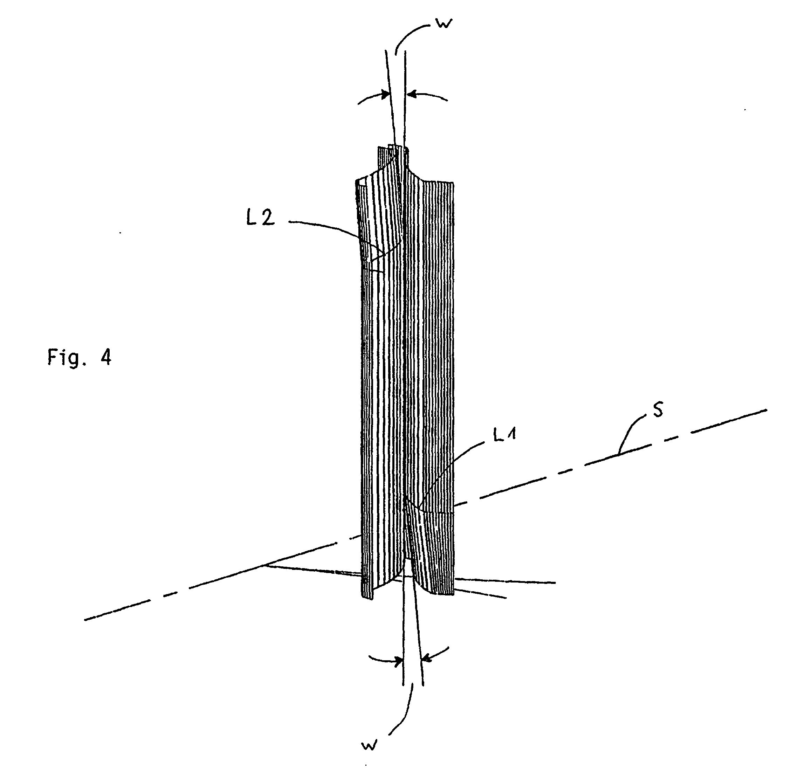

Fig. 4 zeigt zwei Flankenabschnitte von miteinander in Eingriff stehenden erfindungsgemäß ausgebildeten Stirnzahnrädern, wobei die untere Stirnseite schematisch durch die Gerade S angedeutet ist. Mit dem Winkel w ist die jeweilige Endrücknahme der beiden Zahnräder deutlich erkennbar; sie erstreckt sich jeweils bis zur Linie L1, L2. Zwischen diesen Linien ist der Flankenverlauf geradlinig.

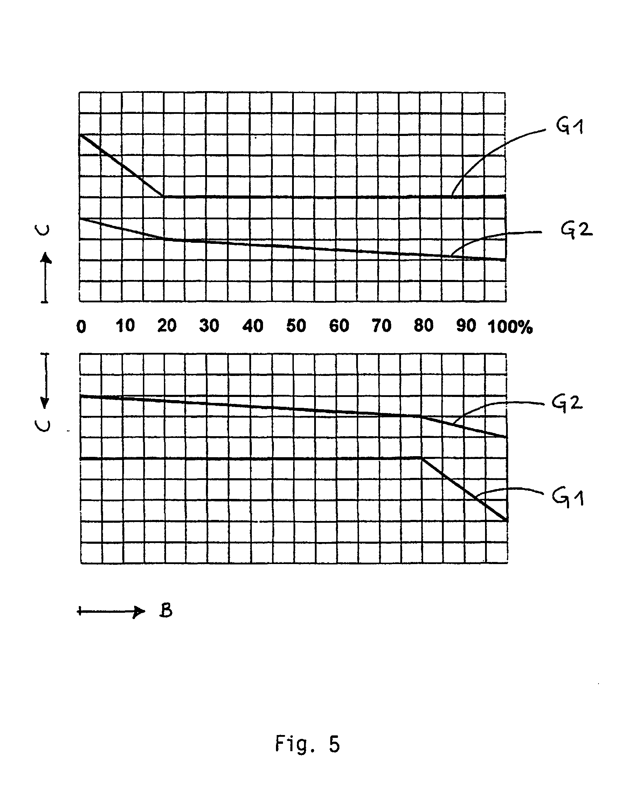

Fig. 5 zeigt für zwei miteinander in Eingriff stehende Räder jeweils den Verlauf der beiden Grenzlinien G1, G2, zwischen denen der konkrete Flankenverlauf wählbar ist. G1 besitzt eine wesentliche stärkere Endrücknahme als G2. Die Grenzlinie G1 verläuft im Bereich außerhalb der Endrücknahme geradlinig in Richtung der Zahnbreite B; die Grenzlinie G2 nimmt zur nicht korrigierten Stirnseite des Zahnrads hin konisch zu. Die Breitenballigkeit ist für die beiden Zahnräder jeweils in Richtung C angegeben.

In der Praxis wird man vorteilhaft jeweils zwei identisch hergestellte Räder miteinander paaren, wobei ein Zahnrad gegenüber dem jeweils anderen um 180⌀ gewendet angeordnet ist.

## Patentansprüche

1. Zahnradpaarung bestehend aus zwei Stirnzahnrädern für gerad- oder schrägverzahnte Laufverzahnungen, welche jeweils nur zu einer Zahnradstirnseite hin unter Ausbildung einer Endrücknahme oder einer Balligkeit der Zahnflanke korrigiert und mit ihrer Korrektur auf gegenüberliegenden Zahnradstirnseiten (3) einander zugeordnet sind,
**dadurch gekennzeichnet,**
**daß** die Zähne außerhalb der Korrektur von der korrigierten Zahnradstirnseite weg einen konischen, zur angrenzenden Zahnflanke hin zunehmenden Flankenverlauf aufweisen.

2. Zahnradpaarung nach Anspruch 1,
**dadurch gekennzeichnet,**
**daß** beide Zahnräder identisch sind.

## Claims

1. Gear pair comprised of two spur gears for straight or helical cut running gears, each corrected only up to one gear face while forming an end relief or a crowning on the tooth flank and associated with their correction on the opposing gear faces (3), **characterised in that** the teeth outside the correction have a flank tapering away from the corrected tooth flank, the taper increasing towards the adjoining tooth flank.

2. Gear pair according to Claim 1, **characterised in that** both gears are identical.

## Revendications

1. Couple d'engrenages comprenant deux roues dentées pour des dentures pour des engrenages à denture droite ou à denture hélicoïdale, qui sont corrigées chacune seulement en direction de l'une des faces frontales de la roue dentée pour former une dépouille d'extrémité ou un bombement dû flanc de dent et sont mutuellement associées avec leur correction sur des faces frontales (3) en vis-à-vis, **caractérisé en ce que** les dents, en dehors de la portion corrigée, dans la direction opposée à la face frontale corrigée, présentent un profil de flanc conique qui s'élargit en direction du flanc de dent contigu.

2. Couple d'engrenages selon la revendication 1, **caractérisé en ce que** les deux roues dentées sont identiques.
